(19) Europäisches Patentamt
European Patent Office
Office européen des brevets

(11) **EP 4 303 536 A2**

(12) **EUROPEAN PATENT APPLICATION**

(43) Date of publication:
**10.01.2024 Bulletin 2024/02**

(21) Application number: **23150607.2**

(22) Date of filing: **06.01.2023**

(51) International Patent Classification (IPC):
**G01C 21/32** *(2006.01)*     **G01C 21/34** *(2006.01)*
**G01C 21/00** *(2006.01)*     **G06Q 10/047** *(2023.01)*

(52) Cooperative Patent Classification (CPC):
**G01C 21/32; G01C 21/3446; G01C 21/3867;
G06Q 10/047**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022 KR 20220071371**

(71) Applicant: **Korea Advanced Institute of Science
and Technology
Daejeon 34141 (KR)**

(72) Inventors:
• **JANG, In Gwun**
  **34141 Daejeon (KR)**
• **KIM, Geunu**
  **34141 Daejeon (KR)**
• **KIM, Sung Yong**
  **34141 Daejeon (KR)**
• **JANG, Kitae**
  **34141 Daejeon (KR)**

(74) Representative: **V.O.**
**P.O. Box 87930**
**2508 DH Den Haag (NL)**

(54) **LOOP-WISE ROUTE REPRESENTATION METHOD FOR VEHICLE ROUTING PROBLEM AND CORRESPONDING OPTIMIZATION FORMULATION**

(57)     Disclosed is a loop-wise route optimization method including defining, by a loop variable designer, a loop as a set of links of a predetermined directionality including a clockwise direction or a counterclockwise direction in which a start node and an end node are the same in a graph including nodes and links; defining, by the loop variable designer, loop variables that are virtual variables each having a continuous value between a negative base route value and a positive base route value assigned in a predetermined directionality including a clockwise direction or a counterclockwise direction to the loop; defining, by a base route designer, a base route has a positive value and of which a travel direction is set in a direction from the origin node to the destination node; and formulating, by an effective route searcher, an effective route problem using the loop variables and the base route.

**FIG. 2**

EP 4 303 536 A2

**Description**

BACKGROUND

1. Field of the Invention

The following description of example embodiments relates to a loop-wise route representation method and an optimization method for a vehicle routing problem.

2. Description of the Related Art

A vehicle routing problem (VRP) refers to a problem for planning a route that allows a transport with a minimum cost to provide a service to n destinations. A representative example is a traveling salesman problem (TSP).

Research on the vehicle routing problem has been actively conducted since publication of the paper by Professor Dantzig' team in 1954 and is currently being used in various fields such as logistics and route planning of an autonomous vehicle.

The vehicle routing problem is known as a non-deterministic polynomial-time hardness (NP-hard) and research is being actively conducted to find a more accurate solution more efficiently.

Existing approaches to the vehicle routing problem according to the related art may be largely classified into an exact method and a heuristic method.

The exact method refers to a method of finding a global optimal solution by systematically exploring a possible route and includes an integer linear programming and a branch and bound as a representative method. However, if a size of problem increases, there is a limitation in that an amount of computation time rapidly increases.

The heuristic method refers to iteratively improving an arbitrary route and may efficiently find an approximate optimal solution even in a large-scale network. As a representative method, the heuristic method includes a nature-inspired algorithm, such as a genetic algorithm, and 2 opt method, but there is a limitation in that it is difficult to determine a parameter and a global optimal solution is not guaranteed.

Although various approaches have been developed for the vehicle routing problem, there are still many limitations due to a computational complexity of the problem itself. In the recent years, the scale and complexity of the vehicle routing problem are further increasing with the development of electric vehicles and autonomous vehicles.

In particular, various nonlinear conditions need to be considered to consider a limiting factor such as maximum mileage according to a battery capacity of an electric vehicle. Therefore, the development of an efficient approach to the vehicle routing problem is required.

SUMMARY

Example embodiments provide a new loop-wise route representation method for a vehicle routing problem (VRP) and provide an optimization method based thereon. In particular, the method defines a base route and a continuous variable set based on a loop unit instead of an existing discrete link variable set based on a link unit and formulate an effective route problem using a smaller number of design variables without separate additional constraints.

According to an aspect, there is provided a loop-wise route representation method for a vehicle routing problem, wherein, to mathematically express a route in a graph including nodes and links, the route is loop-wisely expressed using loop variables and a base route, the loop is defined as a set of links of a predetermined directionality including a clockwise direction or a counterclockwise direction in which a start node and an end node are the same, and the loop variables are virtual variables each having a continuous value between a negative base route value and a positive base route value assigned in a predetermined directionality including a clockwise direction or a counterclockwise direction to the loop defined as the set of links.

According to an example embodiment, when a direction of the loop variable matches a direction of an adjacent link variable, a positive loop variable is assigned to a corresponding link variable, and when the direction of the loop variable is different from the direction of the adjacent link variable, a negative loop variable is assigned to the corresponding link variable.

According to an example embodiment, the link variable is mathematically replaceable using two adjacent loop variables and a base route value, and when the two adjacent loop variables have the same value, the link variable is 0 and a corresponding link is excluded from the route.

According to an example embodiment, the base route is an arbitrary route that connects an origin node and a destination node of the route, a base route value is an arbitrary positive number, and a travel direction is set in a direction from the origin node to the destination node, when a direction of the base route matches a direction of a corresponding link, a positive base route value is assigned to a corresponding link variable, and when the direction of the base route is different from the direction of the corresponding link, a negative base route value is assigned to the corresponding link variable.

According to an example embodiment, the route is loop-wisely expressed using a cluster configuration of loop variables and the base route or expressed as a link route corresponding to the cluster configuration of loop variables and the base route.

According to an example embodiment, additional constraints for connectivity between the routes is replaceable using the base route by loop-wisely expressing the route using the cluster configuration of loop variables and the base route, and, in response to a flow conversation law being satisfied in all nodes, the additional constraints for the connectivity between the routes are not required.

According to an example embodiment, settings of constraints on a waypoint is replaceable by loop-wisely expressing the route using the cluster configuration of loop variables and the base route, and a traveling salesman problem (TSP) is formulated.

According to another aspect, there is provided a loop-wise route optimization method for a vehicle routing problem, the route optimization method including defining, by a loop variable designer, a loop as a set of links of a predetermined directionality including a clockwise direction or a counterclockwise direction in which a start node and an end node are the same in a graph including nodes and links to mathematically express the route; defining, by the loop variable designer, loop variables that are virtual variables each having a continuous value between a negative base route value and a positive base route value assigned in a predetermined directionality including a clockwise direction or a counterclockwise direction to the loop defined as the set of links; defining, by a base route designer, a base route that connects an origin node and a destination node of the route and has a positive value and of which a travel direction is set in a direction from the origin node to the destination node; and formulating, by an effective route searcher, an effective route problem using the loop variables and the base route.

According to an example embodiment, the defining, by the loop variable designer, the loop variables includes assigning a positive loop variable to a corresponding link variable when a direction of the loop variable matches a direction of an adjacent link variable; and assigning a negative loop variable to the corresponding link variable when the direction of the loop variable is different from the direction of the adjacent link variable.

According to an example embodiment, the link variable is mathematically replaceable using two adjacent loop variables and a base route value, and when the two adjacent loop variables have the same value, the link variable is 0 and a corresponding link is excluded from the route.

According to an example embodiment, the defining, by the base route designer, the base route includes assigning a positive base route value to a corresponding link variable when a direction of the base route matches a direction of a corresponding link; and assigning a negative base route value to the corresponding link variable when the direction of the base route is different from the direction of the corresponding link.

According to an example embodiment, the formulating includes loop-wisely expressing the route using a cluster configuration of loop variables and the base route or expressing the route as a link route corresponding to the cluster configuration of loop variables and the base route; and formulating the effective route problem using the loop variables and the base route.

According to still another aspect, there is provided a loop-wise route optimization apparatus for a vehicle routing problem, the route optimization apparatus including a loop variable designer configured to define a loop as a set of links of a predetermined directionality including a clockwise direction or a counterclockwise direction in which a start node and an end node are the same in a graph including nodes and links to mathematically express the route, and to define loop variables that are virtual variables each having a continuous value between a negative base route value and a positive base route value assigned in a predetermined directionality including a clockwise direction or a counterclockwise direction to the loop defined as the set of links; a base route designer configured to define a base route that connects an origin node and a destination node of the route and has a positive value and of which a travel direction is set in a direction from the origin node to the destination node; and an effective route searcher configured to formulate an effective route problem using the loop variables and the base route.

According to some example embodiments, it is possible to apply to various vehicle routing problems, such as a traveling salesman problem (TSP) in addition to an effective route problem. The general use for such route optimization has limitation with the existing invention and theory and requires a formation such as additional constraints. However, the example embodiments may formulate the vehicle routing problem and significantly improve a computational speed and accuracy without separate additional constraints followed by a change in conditions of the vehicle routing problem.

Further areas of applicability will become apparent from the description provided herein. The description and specific examples in this summary are intended for purposes of illustration only and are not intended to limit the scope of the present disclosure.

BRIEF DESCRIPTION OF THE DRAWINGS

These and/or other aspects, features, and advantages of the invention will become apparent and more readily appreciated from the following description of embodiments, taken in conjunction with the accompanying drawings of which:

> FIG. 1 illustrates a concept of a link-based route representation according to the related art;
> FIG. 2 illustrates a loop-wise route representation method for a vehicle routing problem according to an example embodiment;
> FIGS. 3A and 3B illustrate a method of setting an individual loop and a loop variable according to an example embodiment;
> FIG. 4 illustrates a concept of a loop-wise route representation method according to an example embodiment;
> FIG. 5 illustrates a route representation method in a 6 X 6 lattice planar graph according to an example embodiment;
> FIG. 6 illustrates an example of satisfying a flow conservation law in a loop-wise route representation method according to an example embodiment;
> FIG. 7 illustrates an example of an optimal design formation for a traveling salesman problem using a loop-wise route representation method according to an example embodiment;
> FIG. 8 is a flowchart illustrating a loop-wise route optimization method for a vehicle routing problem according to an example embodiment;
> FIG. 9 is a diagram illustrating a configuration of a loop-wise route optimization apparatus for a vehicle routing problem according to an example embodiment;
> FIG. 10 illustrates an example of comparing the related art and experimental results of an effective route problem according to an example embodiment;
> FIG. 11 illustrates an example of experimental results for a traveling salesman problem according to an example embodiment;
> FIG. 12 illustrates another example of experimental results for a traveling salesman problem according to an example embodiment;
> FIG. 13 illustrates still another example of experimental results for a traveling salesman problem according to an example embodiment;
> FIG. 14 illustrates still another example of experimental results for a traveling salesman problem according to an example embodiment;
> FIG. 15 illustrates comparison results between the related art and a traveling salesman problem according to an example embodiment;
> FIG. 16 illustrates comparison results between the related art and an increase/decrease rate of a total route cost for a traveling salesman problem according to an example embodiment; and
> FIG. 17 illustrates an example of comparing the related art and an optimization method in delivery and logistics transportation route according to an example embodiment.

DETAILED DESCRIPTION

Hereinafter, example embodiments will be described with reference to the accompanying drawings.

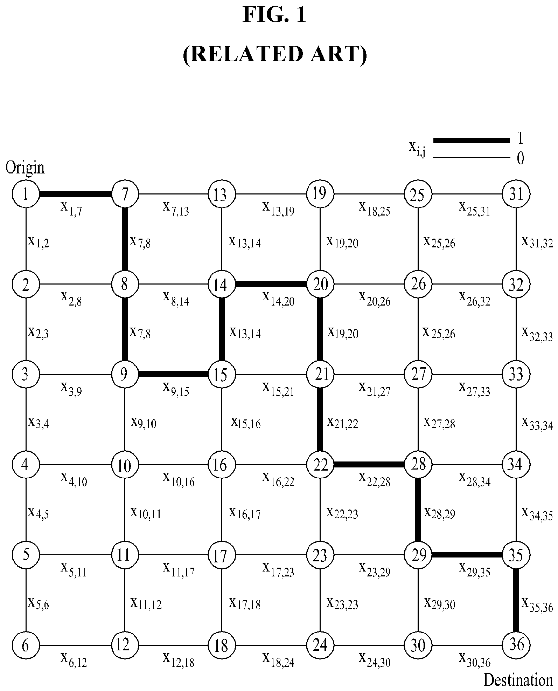

FIG. 1 illustrates a concept of a link-based route representation according to the related art.

Referring to FIG. 1, to mathematically express a route that connects two nodes, for example, a number 1 node and a number 36 node in a network configured with nodes and links, the existing method assigns a discrete variable $(x_{i,j})$ for each link $(_{i,j})$. That is, when included in the route, a corresponding link has a value of 1 and otherwise, has a value of 0.

An effective route, that is, a shortest route optimization method using the existing link-based route representation method may be represented as follows:

$$\text{Minimize} \quad f(\boldsymbol{X}) = \sum_{i=1} \sum_{j=1} c_{i,j} x_{i,j}$$

$$\text{Subject to}$$

$$g(\boldsymbol{X}) = \sum_{j} x_{i,j} - \sum_{j} x_{j,i} = \begin{cases} 1, & \text{if } i = o; \\ -1, & \text{if } i = d; \\ 0, & \text{otherwise.} \end{cases} \qquad \text{Equation (1)}$$

An objectivfe function refers to cost of the entire route and a sum of product between link cost ($c_{i,j}$) and link variables ($x_{i,j}$). As constraints for continuous route representation, a difference between a sum of outflows ( $\sum_{j} x_{j,i}$ )

and a sum of inflows ( $\sum_{j} x_{i,j}$ ) is assigned to an origin node (o) and a destination node (d) and a remaining node (i).

In the case of the origin node and the destination node, only if the difference between the sum of outflows and the sum of inflows is 1 and -1, only a singel route link ($x_{i,j}$ = 1) may be present in a corresponding node. For the remaining node, a constraint equation is configured with the difference between the sum of outflows and the sum of inflows as 0. Through this, for nodes irrelevant to the route, all adjacent link variables are zeroes and for each node through whch the route passes, a single inflow route link and a single outflow route link are present, which satisfies the cosntraints. As described above, in the existing link-based route representation method, the constraints need to be set to solve the effective route problem.

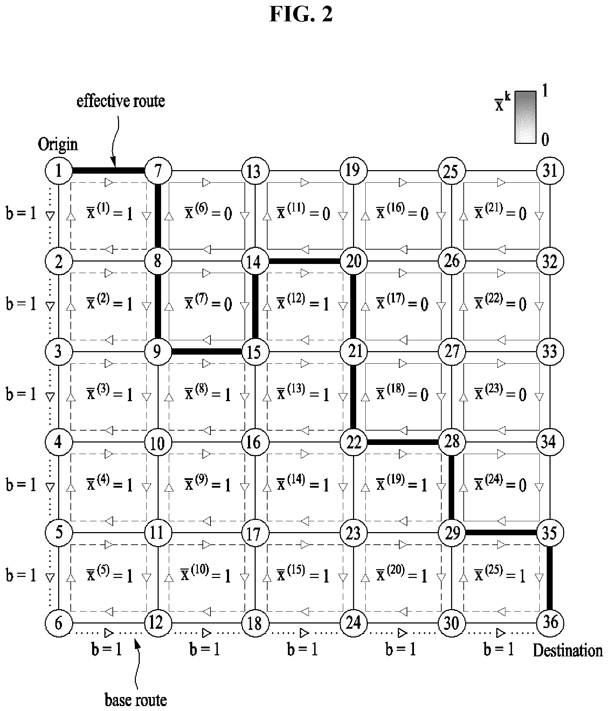

FIG. 2 illustrates a loop-wise route representation method for a vehicle routing problem (VRP) according to an example embodiment.

Since the vehicle routing problem is still an intractable problem in spite of many studies to date, it is necessary to develop a more simple and efficient method. In particular, in the existing route representation method, constraints are essential to mathematically compute an effective route, that is, a shortest route that connects arbitrary two nodes.

Herein, proposed is a new loop-wise route representation method for the vehicle routing problem and also proposed is an optimization method based thereon. In particular, the proposed method defines a base route and a continuous variable set based on a loop instead of an existing discrete link variable set based on a link. Through this, the effective route problem may be formulated using a fewer number of design variables without separate additional constraints.

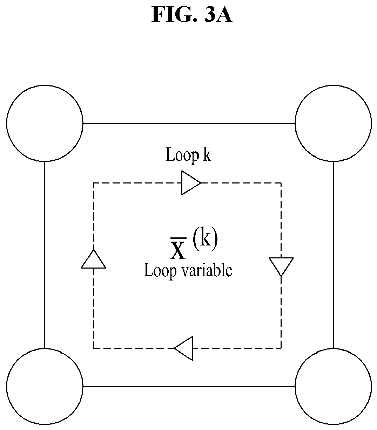

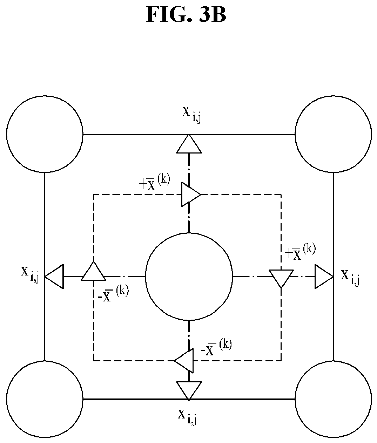

FIGS. 3A and 3B illustrate a method of setting an individual loop and a loop variable according to an example embodiment.

FIG. 3A illustrates a method of setting an individual loop and a loop variable according to an example embodiment and FIG. 3B illustrates a relationship between a link variable and a loop variable according to an example embodiment.

A loop-wise route representation method for a vehicle routing problem according to an example embodiment refers to a route representation method using a fewer number of loop variables and a base route than the conventional link-based route representation method to mathematically express a route in a graph including nodes and links.

In the proposed invention, a loop is defined as a set of links of a predetermined directionality including a clockwise direction or a counterclockwise direction in which a start node and an end node are the same (FIG. 3A) and a loop variable is defined as a virtual variable having a continuous value between a negative base route value and a positive base route value assigned in a predetermined directionality including a clockwise direction or a counterclockwise direction to an individual loop. Herein, the predetermined directionality including the clockwise direction or the counterclockwise direction according to an example embodiment is not limited to a specific direction and a route may be determined in all cases according to a unique directionality.

Referring to FIG. 3B, when a direction of the loop variable matches a direction of an adjacent link variable ($x_{i,j}$), a positive loop variable ($+\bar{x}^{(k)}$) is assigned to a corresponding link variable. When the direction of the loop variable is different from the direction of the adjacent link variable, a negative loop variable ($-\bar{x}^{(k)}$) is assigned to the corresponding link variable.

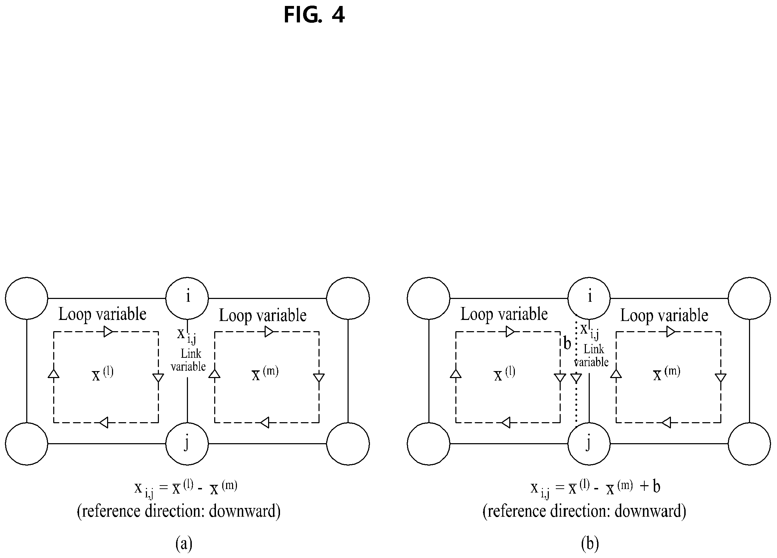

FIG. 4 illustrates a concept of a loop-wise route representation method according to an example embodiment.

(a) of FIG. 4 illustrates a loop-wise route representation method when a base route is not included according to an example embodiment and (b) of FIG. 4 illustrates a loop-wise route representation method when a base route is included according to an example embodiment.

The base route according to an example embodiment refers to an arbitrary route that connects an origin node and a destination node and a travel direction thereof is set in a direction connected from the origin node to the destination node. A base route value (b) refers to an arbitrary positive number. Referring to (b) of FIG. 4, when a direction of the base route matches a direction of the corresponding link, a positive base route value (+b) is assigned to a corresponding link variable. When the direction of the base route is different from the direction of the corresponding link, a negative base route value (-b) is assigned to the corresponding link variable.

According to an example embodiment, a link variable ($x_{i,j}$) used in a route representation method according to the related art may be mathematically replaced with two adjacent loop variables ($\overline{x}^{(k)}$) and a base route value (b). In particular, when the two adjacent loop variables have the same value, the link variable is 0, which indicates that the corresponding link is excluded from the route.

When the base route value is set to 1 and all the loop variables are determined as 0 in a target network, all the link variable values included in the base route become 1 and all other link variables become 0. That is, it indicates that the base route is selected as an effective route, that is, a shortest route.

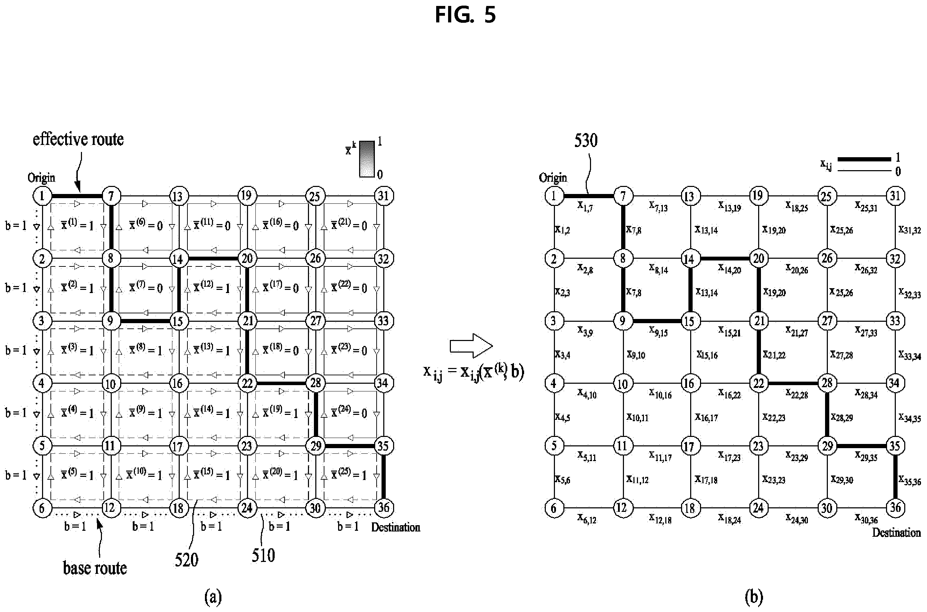

FIG. 5 illustrates a route representation method in a 6 X 6 lattice planar graph according to an example embodiment.

(a) of FIG. 5 illustrates an example of a loop-wise route representation method according to an example embodiment and (b) of FIG. 5 illustrates an example of a link-wise route representation method according to the related art.

The loop-wise route representation method according to an example embodiment may be represented as a cluster configuration of loop variables 520 and a base route 510 and may be expressed as a link route 530 corresponding thereto.

For example, in the 6 X 6 lattice planar graph of FIG. 5, the existing link-based route representation method may be expressed using a total of 60 link variables and the loop-wise route representation method according to the example embodiment may be expressed using a total of 25 loop variables only. Also, according to an example embodiment, since additional constraints for route connectivity are not required, it is possible to more conveniently and quickly search for an optimal solution on an optimal design.

An effective route problem according to the related art may be formulated as follows:

$$\text{Find } \boldsymbol{X}$$

$$\text{Minimize } f(\boldsymbol{X}) = \sum_{i=1}\sum_{j=1} c_{i,j} x_{i,j}$$

$$\text{Subject to}$$

$$g(\boldsymbol{X}) = \sum_{j} x_{i,j} - \sum_{i} x_{i,j} = \begin{cases} 1, & \text{if } i = o; \\ -1, & \text{if } i = d; \ \forall i \\ 0, & \text{otherwise.} \end{cases}$$

$$x_{i,j} \geq 0 \qquad\qquad\qquad\qquad \text{Equation (2)}$$

In contrast, in the case of using the loop-wise route representation method according to an example embodiment, it is possible to formulate the effective route problem without separate constraints, as follows:

$$\text{Find } \bar{X}$$

$$\text{Minimize} \quad f(\bar{X}) = \sum_{i=1} \sum_{j=1} c_{i,j} |x_{i,j}(\bar{x}^{(k)})|$$

$$0 \le \bar{x}^{(k)} \le 1 \quad \forall k \qquad\qquad \text{Equation (3)}$$

Simplification of an equation represents a decrease in a computational amount in an optimization process.

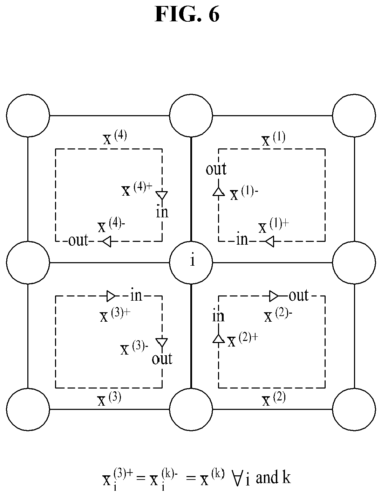

FIG. 6 illustrates an example of satisfying a flow conservation law in a loop-wise route representation method according to an example embodiment.

In the proposed loop-wise route representation method, a base route may replace constraints in relation to an origin node and a destination node. Referring to FIG. 6, since a flow conservation law is satisfied in all nodes, separate constraints to guarantee route connectivity are not required.

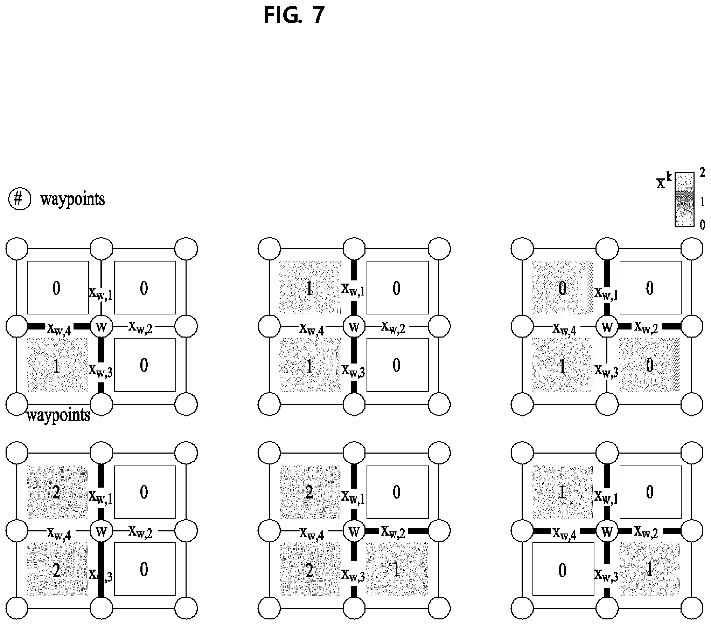

FIG. 7 illustrates an example of an optimal design formation for a traveling salesman problem (TSP) using a loop-wise route representation method according to an example embodiment.

Referring to FIG. 7, constraints may be set for waypoints using characteristics of the loop-wise route representation method.

In the case of using the loop-wise route representation method according to the example embodiment, the traveling salesman problem (TSP) may be formulated as follows:

$$\text{Find } \bar{X}$$

$$\text{Minimize} \quad f(\bar{X}) = \sum_{i=1} \sum_{j=1} c_{ij} |x_{ij}(\bar{x}^{(k)})|$$

$$\text{Subject to}$$

$$g_w(\bar{X}) = b - \sum |x_{w,adj}| \le 0 \quad \forall w$$

$$0 \le \bar{x}^{(k)} \le b \quad \forall k \qquad\qquad \text{Equation (4)}$$

A sensitivity equation for constraints for the optimal design of the traveling salesman problem may be induced as follows:

$$\frac{\partial f}{\partial \bar{x}^{(k)}} = \sum sign(x_{i,j}) c_{i,j} \quad \forall \, link(i,j) \text{ adjacent to node } k$$

$$\frac{\partial g}{\partial \bar{x}^{(k)}} = -\sum sign(x_{w,adj}) \quad \forall \, link(w, adj) \text{ adjacent to both a loop } k \text{ and waypoints } w$$

$$\text{where } sign(x_{i,j}) = \begin{cases} 1 & if \; x_{i,j} \text{ and } \bar{x}^{(k)} \text{ are in the same direction} \\ -1 & if \; x_{i,j} \text{ and } \bar{x}^{(k)} \text{ are in the opposite direction} \\ 0 & if \; x_{i,j} = 0 \end{cases}$$

$$\text{Equation(5)}$$

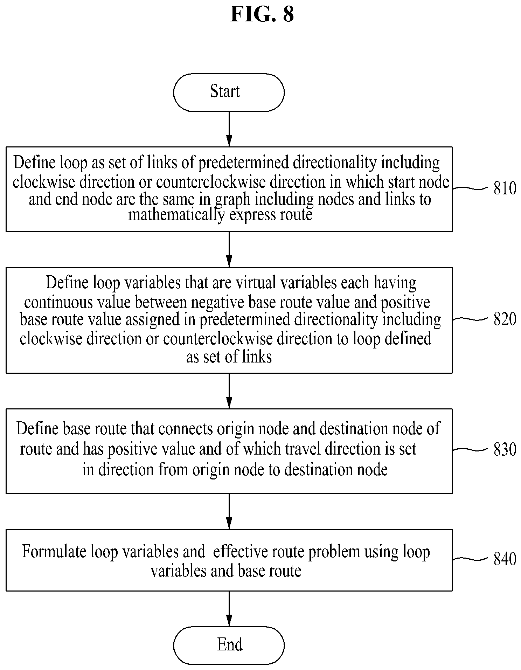

FIG. 8 is a flowchart illustrating a loop-wise route optimization method for a vehicle routing problem (VRP) according to an example embodiment.

The proposed loop-wise route optimization method for the vehicle routing problem includes operation 810 of defining, by a loop variable designer, a loop as a set of links of a predetermined directionality including a clockwise direction or a counterclockwise direction in which a start node and an end node are the same in a graph including nodes and links to mathematically express the route, operation 820 of defining, by the loop variable designer, loop variables that are virtual variables each having a continuous value between a negative base route value and a positive base route value assigned in a predetermined directionality including a clockwise direction or a counterclockwise direction to the loop defined as the set of links, operation 830 of defining, by a base route designer, a base route that connects an origin node and a destination node of the route and has a positive value and of which a travel direction is set in a direction from the origin node to the destination node, and operation 840 of formulating, by an effective route searcher, an effective route problem using the loop variables and the base route.

In operation 810, the loop variable designer defines a loop as a set of links of a predetermined directionality including a clockwise direction or a counterclockwise direction in which a start node and an end node are the same in a graph including nodes and links to mathematically express the route.

In operation 820, the loop variable designer defines loop variables that are virtual variables each having a continuous value between a negative base route value and a positive base route value assigned in a predetermined directionality including a clockwise direction or a counterclockwise direction to the loop defined as the set of links. Herein, the predetermined directionality including the clockwise direction or the counterclockwise direction according to an example embodiment is not limited to a specific direction and a route may be determined in all cases according to a unique directionality.

Here, when a direction of the loop variable matches a direction of an adjacent link variable, the loop variable designer assigns a positive loop variable to a corresponding link variable, and when the direction of the loop variable is different from the direction of the adjacent link variable, the loop variable designer assigns a negative loop variable to the corresponding link variable.

According to an example embodiment, the link variable is mathematically replaceable using two adjacent loop variables and a base route value, and when the two adjacent loop variables have the same value, the link variable is 0 and a corresponding link is excluded from the route.

In operation 830, the base route designer defines a base route that connects an origin node and a destination node of the route and has a positive value and of which a travel direction is set in a direction from the origin node to the destination node.

Here, when a direction of the base route matches a direction of a corresponding link, the base route designer assigns a positive base route value to a corresponding link variable, and when the direction of the base route is different from the direction of the corresponding link, the base route designer assigns a negative base route value to the corresponding link variable.

In operation 840, the effective route searcher formulates an effective route problem using the loop variables and the base route.

According to an example embodiment, the effective route searcher loop-wisely expresses the route using a cluster configuration of loop variables and the base route or expresses the route as a link route corresponding to the cluster configuration of loop variables and the base route, and formulates the effective route problem using the loop variables and the base route.

According to an example embodiment, additional constraints for connectivity between the routes is replaceable using the base route by loop-wisely expressing the route using the cluster configuration of loop variables and the base route, and, in response to a flow conversation law being satisfied in all nodes, the additional constraints for the connectivity between the routes are not required.

According to an example embodiment, settings of constraints on a waypoint may be replaced by loop-wisely expressing the route using the cluster configuration of loop variables and the base route, and a traveling salesman problem (TSP) may be formulated.

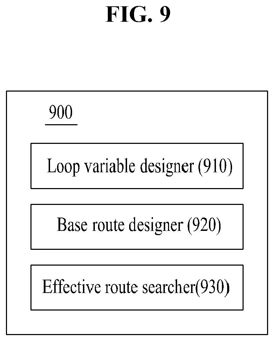

FIG. 9 is a diagram illustrating a configuration of a loop-wise route optimization apparatus for a vehicle routing problem according to an example embodiment.

A loop-wise route optimization apparatus 900 for a vehicle routing problem proposed herein includes a loop variable designer 910, a base route designer 920, and an effective route searcher 930.

The loop variable designer 910 defines a loop as a set of links of a predetermined directionality including a clockwise direction or a counterclockwise direction in which a start node and an end node are the same in a graph including nodes and links to mathematically express the route.

The loop variable designer 910 according to an example embodiment defines loop variables that are virtual variables each having a continuous value between a negative base route value and a positive base route value assigned in a predetermined directionality including a clockwise direction or a counterclockwise direction to the loop defined as the set of links. Herein, the predetermined directionality including the clockwise direction or the counterclockwise direction according to an example embodiment is not limited to a specific direction and a route may be determined in all cases according to a unique directionality.

Here, when a direction of the loop variable matches a direction of an adjacent link variable, the loop variable designer 910 assigns a positive loop variable to a corresponding link variable, and when the direction of the loop variable is different from the direction of the adjacent link variable, the loop variable designer 910 assigns a negative loop variable to the corresponding link variable.

The loop variable designer 910 according to an example embodiment mathematically replaces the link variable using two adjacent loop variables and a base route value, and when the two adjacent loop variables have the same value, the link variable is 0 and a corresponding link is excluded from a route.

The base route designer 920 according to an example embodiment defines a base route that connects an origin node and a destination node of the route and has a positive value and of which a travel direction is set in a direction from the origin node to the destination node.

Here, when a direction of the base route matches a direction of a corresponding link, the base route designer 920 according to an example embodiment assigns a positive base route value to a corresponding link variable, and when the direction of the base route is different from the direction of the corresponding link, the base route designer 920 assigns a negative base route value to the corresponding link variable.

The effective route searcher 930 according to an example embodiment formulates an effective route problem using the loop variables and the base route.

The effective route searcher 930 according to an example embodiment loop-wisely expresses the route using a cluster configuration of loop variables and the base route or expresses the route as a link route corresponding to the cluster configuration of loop variables and the base route, and formulates the effective route problem using the loop variables and the base route.

The effective route searcher 930 according to an example embodiment may replace additional constraints for connectivity between the routes using the base route by loop-wisely expressing the route using the cluster configuration of loop variables and the base route, and does not require the additional constraints for the connectivity between the routes in response to a flow conversation law being satisfied in all nodes.

The effective route searcher 930 according to an example embodiment may replace settings of constraints on a waypoint by loop-wisely expressing the route using the cluster configuration of loop variables and the base route, and may formulate a traveling salesman problem (TSP).

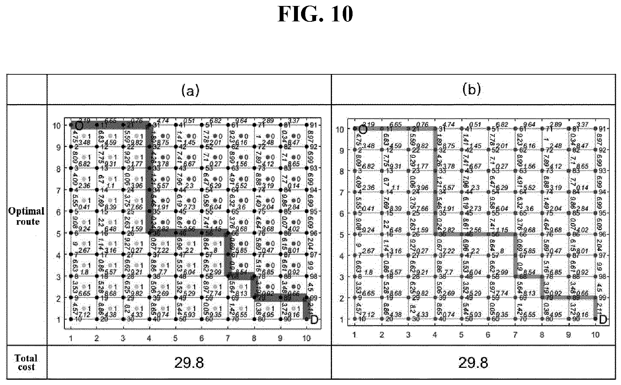

FIG. 10 illustrates an example of comparing the related art and experimental results of an effective route problem according to an example embodiment.

(a) of FIG. 10 illustrates experimental results for an effective route problem using a loop-wise route representation method according to an example embodiment, and (b) of FIG. 10 illustrates experimental results for an effective route problem using a link-wise route representation method according to the related art.

Through examples of various numerical values including the effective route problem of FIG. 10, it is verified that the proposed method may derive the same route as that of the existing method (Dijkstra) of deriving the global optimal solution.

In the case of the traveling salesman problem, the performance of the proposed method is validated by constructing a size of the graph and the number of waypoints as shown in Table 1.

<Table 1>

| Experiment | Size of planar graph | Number of waypoints |
|---|---|---|
| 1 | 10X10 | 20 |
| 2 | | 40 |
| 3 | 12X 12 | 40 |
| 4 | | 60 |

In an experimental configuration, waypoints and link-wise cost are randomly set and a total of 100 experiments were conducted, 25 times for each experiment, to provide statistically significant results.

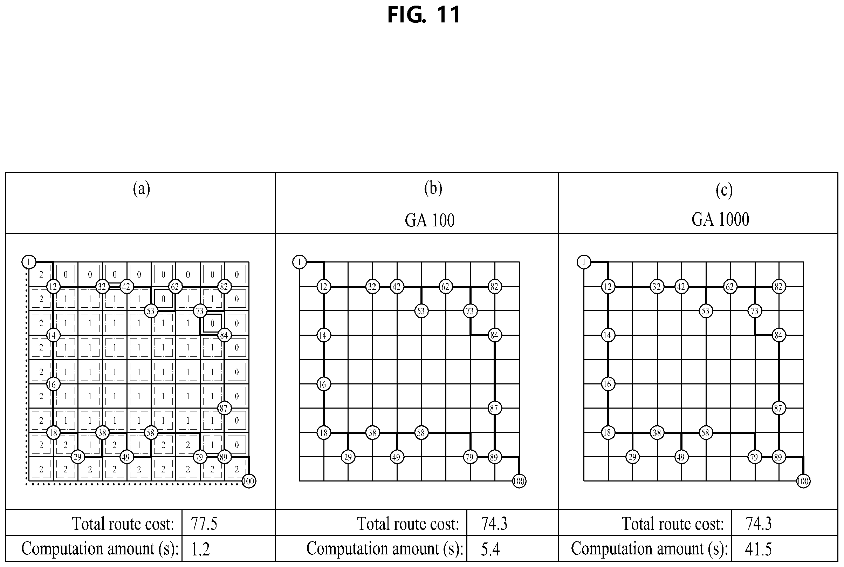

A genetic algorithm (GA) was selected for performance comparison with the proposed method and optimization for the traveling salesman problem was performed. The results derived from population sizes of 100 and 1000 are referred to as GA100 and GA1000, respectively, and are compared with the results of the methods proposed in FIGS. 11 to 14.

FIG. 11 illustrates an example of experimental results for a traveling salesman problem according to an example embodiment.

FIG. 11 illustrates results of an experiment in which a size of a planar graph is 10X10 and the number of waypoints is 20.

Total cost according to an experiment of the proposed method ((a) of FIG. 11) is 77.5 and a computation time is 1.2 seconds.

Total cost according to an experiment of GA100 ((b) of FIG. 11) is 74.3 and a computation time is 5.4 seconds.

Total cost according to an experiment of GA1000 ((c) of FIG. 11) is 74.3 and a computation time is 41.5 seconds.

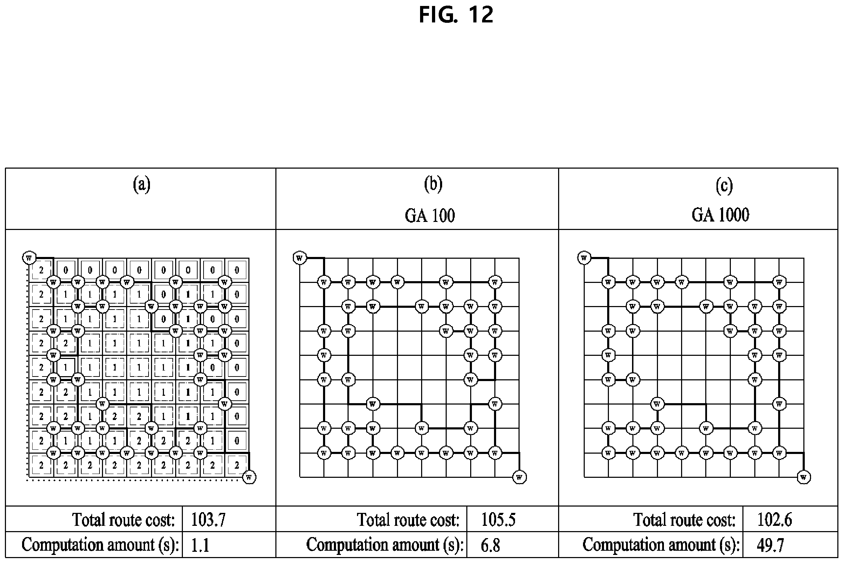

FIG. 12 illustrates another example of experimental results for a traveling salesman problem according to an example embodiment.

FIG. 12 illustrates results of an experiment in which a size of a planar graph is 10X10 and the number of waypoints is 40.

Total cost according to an experiment of the proposed method ((a) of FIG. 12) is 103.7 and a computation time is 1.1 seconds.

Total cost according to an experiment of GA100 ((b) of FIG. 12) is 105.5 and a computation time is 6.8 seconds.

Total cost according to an experiment of GA1000 ((c) of FIG. 12) is 102.6 and a computation time is 49.7 seconds.

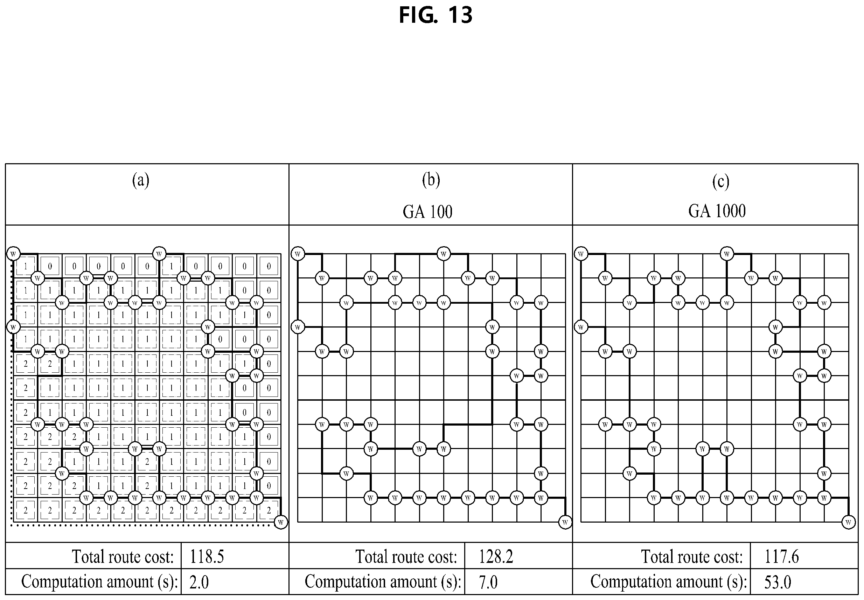

FIG. 13 illustrates still another example of experimental results for a traveling salesman problem according to an example embodiment.

FIG. 13 illustrates results of an experiment in which a size of a planar graph is 12X12 and the number of waypoints is 40.

Total cost according to an experiment of the proposed method ((a) of FIG. 13) is 118.5 and a computation time is 2.0 seconds.

Total cost according to an experiment of GA100 ((b) of FIG. 13) is 128.2 and a computation time is 7.0 seconds.

Total cost according to an experiment of GA1000 ((c) of FIG. 13) is 117.6 and a computation time is 53.0 seconds.

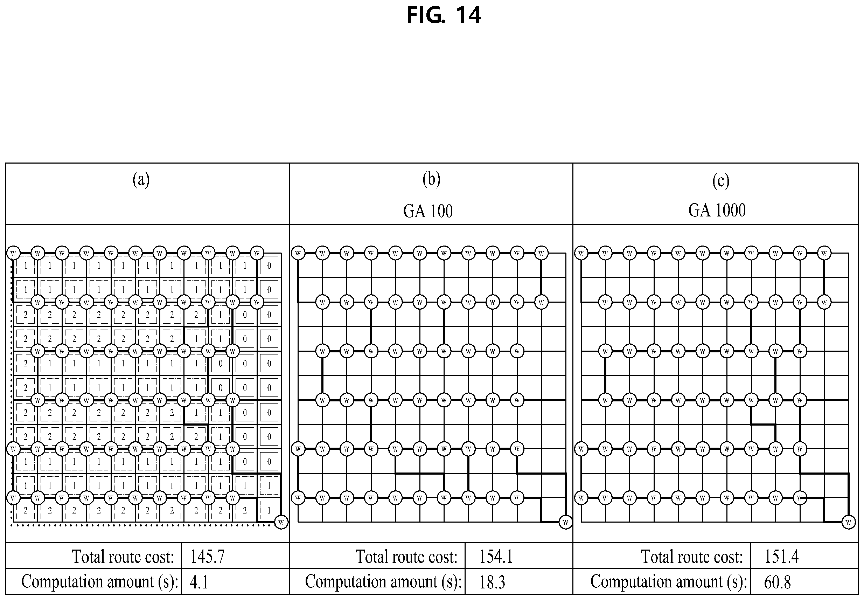

FIG. 14 illustrates still another example of experimental results for a traveling salesman problem according to an example embodiment.

FIG. 14 illustrates results of an experiment in which a size of a planar graph is 12X12 and the number of waypoints is 60.

Total cost according to an experiment of the proposed method ((a) of FIG. 14) is 145.7 and a computation time is 4.1 seconds.

Total cost according to an experiment of GA100 ((b) of FIG. 14) is 154.1 and a computation time is 18.3 seconds.

Total cost according to an experiment of GA1000 ((c) of FIG. 14) is 151.4 and a computation time is 60.8 seconds.

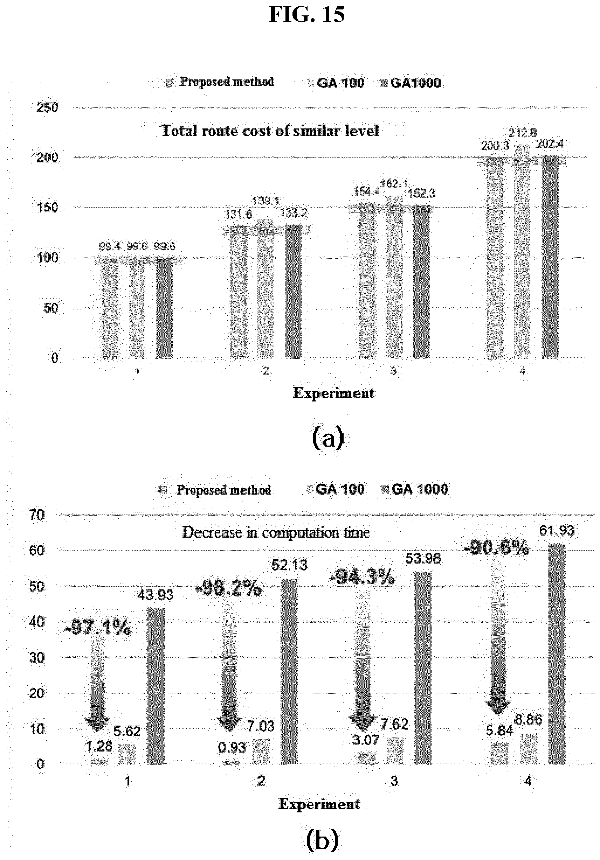

FIG. 15 illustrates comparison results between the related art and a traveling salesman problem according to an example embodiment.

(a) of FIG. 15 illustrates comparison results for a computation time for the traveling salesman problem according to an example embodiment and (b) of FIG. 15 illustrates comparison results for total route cost for the traveling salesman problem according to an example embodiment.

Referring to FIGS. 11 to 14, results of performing comparative experiments show that the proposed method efficiently performs route optimization compared to the existing genetic algorithm.

Referring to (a) of FIG. 15, the proposed method derived a better route in a shorter time than GA100. Referring to (b) of FIG. 15, the proposed method may derive a similar level of total route cost to GA1000.

Also, referring to (a) of FIG. 15, the proposed method may reduce a computation time by up to 98.2% compared to GA1000.

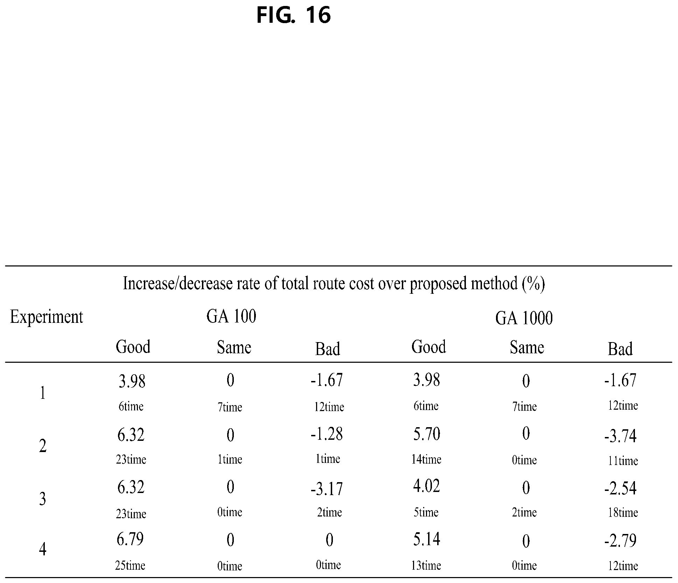

FIG. 16 illustrates comparison results between the related art and an increase/decrease rate of total route cost for a traveling salesman problem according to an example embodiment.

In a relative comparison for a derived optimal route, a performance degradation rate in "bad" category is suppressed to less than 3.74% at maximum, while a performance improvement rate in "good" category is 3.98% or more. This represents that the proposed method derives an optimal route of superior quality with higher computational efficiency compared to the existing genetic algorithm. The proposed method may expand and apply to various vehicle routing problems based on a loop-wise route setting.

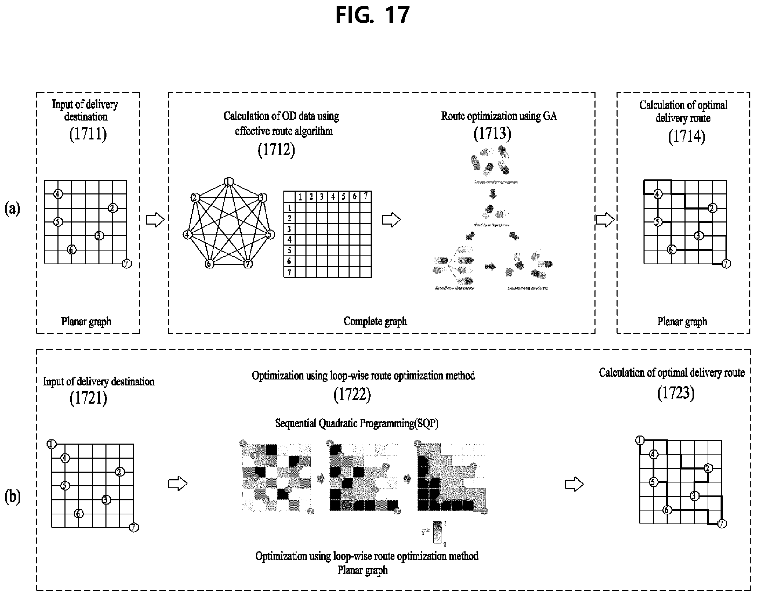

FIG. 17 illustrates an example of comparing the related art and an optimization method in delivery and logistics transportation route according to an example embodiment.

(a) of FIG. 17 illustrates an optimization method in a delivery and logistics transportation route according to an example embodiment and (b) of FIG. 17 illustrates an optimization method in a delivery and logistics transportation route according to the related art.

A traveling salesman problem that is a representative vehicle routing problem is non-deterministic polynomial-time (NP)-hard and an amount of optimization computation time significantly increases according to an increase in the number of waypoints. Also, in the case of using a heuristic method, accuracy of a derived solution may decrease. Therefore, a lot of researches are being conducted on a method capable of quickly and accurately deriving an optimal route for a road network of a complex scale.

The loop-wise route representation method proposed herein may easily simplify a route planning problem and may have an excellent computation speed and result accuracy than a conventional genetic algorithm. Also, the loop-wise route representation method may expand and apply to various transportation and logistics fields.

The use of electric vehicles is increasing in various industries, such as electric shuttle buses, electric vehicles for fresh logistics delivery, and the like. When establishing an electric vehicle operation plan, a battery capacity limit is an important factor to consider. In particular, establishing an optimal route in the logistics transportation field may have a greatest impact on the overall logistics cost that includes environmental cost.

Compared to the existing method, more efficient optimization is possible even for a delivery optimization problem that needs to reflect many waypoints.

In terms of delivery & logistics transportation route optimization, the existing delivery & logistics business performs a transportation through inefficient routes depending on experience of delivery drivers.

Referring to (a) of FIG. 17, when a delivery destination is input (1711), origin-destination (OD) data is calculated using an effective route algorithm (1712), route optimization using a GA is performed (1713), and an optimal delivery route is calculated accordingly (1714).

Although conventional delivery optimization methodologies for efficient transportation are proposed, an amount of computation time exponentially increases when a large number of delivery destinations are present and it is difficult to apply in practice due to an increase in an amount of computation time and cost.

Referring to (b) of FIG. 17, in the case of delivery & logistics transportation route optimization according to an example embodiment, when a delivery destination is input (1721), a route optimization is performed using a loop-wise route optimization method (1722) and an optimal delivery route is calculated accordingly (1723).

When applying the example embodiment to the delivery & logistics route optimization, it is possible to establish an optimization formulation in which constraints on waypoints are simplified. Since computation is performed with a simplified formulation, it is possible to provide route information in a shorter computation time than before.

According to another example embodiment, the proposed method may apply to a vehicle routing problem of an on-demand public transportation bus based on a loop-wise route setting.

Currently, in the public transportation industry, proposed is an on-demand public transportation service that autonomously operates according to a demand of passengers without a fixed route. However, due to a limitation of route optimization, only some functions are provided for limited areas.

To provide the on-demand public transportation service in a wide area, there is a need for a method that may simplify a route optimization problem in a complex road network. The example embodiment may simplify a complex and wide road network and formulate an optimal design using the loop-wise route representation method.

The existing vehicle route planning studies have been conducted mainly on theoretical solution, but the example embodiment provides a method applicable to practical problems. The example embodiment may simplify an optimal design formation, such as settings of constraints on waypoints through a base route and a loop-wise route representation even in a complex road network.

In the case of using the example embodiment, it is possible to introduce new technology in the field of logistics, such as a drone, a robot, an electric vehicle, etc., to a vehicle route planning. In particular, since new constraints, such as battery management, may be efficiently dealt, it is possible to secure unmanned and eco-friendly core technology in the field of transportation/logistics.

Recently, the introduction of a delivery business using a micro electric vehicle has started and other businesses using electric vehicles are expected to emerge in various fields. In particular, although companies and research institutions are greatly interested in linking eco-friendly electric vehicles with fresh logistics delivery, research and development has been carried out only in a limited form due to a difficulty in reflecting a battery management in a delivery route optimization.

In the case of applying a route optimization in consideration of a remaining electric energy capacity according to an example embodiment, it is possible to develop a fresh logistics service based on an eco-friendly electric vehicle. Through this, new economic values may be created.

To respond to a shortage of delivery manpower due to a recent rapid growth of the e-commerce market, an unmanned delivery system using a drone or a robot is emerging. A domestic unmanned delivery (drone, robot) system is still in an implementation and development stage, but is limitedly implemented due to a difficulty in building a system for an efficient operation of unmanned transportation equipment.

However, the emergence of the unmanned delivery service represents that various unmanned technologies need to be additionally considered when planning a route in the future. Whether related route planning technology is secured will be very important in terms of technological competitiveness. In the case of simplifying a route planning optimization problem and reflecting characteristics (battery management, etc.) of unmanned technology according to an example embodiment, commercialization and related markets will be secured.

Also, in the field of a travel route planning service, travel-related route planning has been empirically constructed by guides or travel agencies with extensive experience in a corresponding travel destination. Recently, there are studies on planning tourist routes for famous tourist destinations, such as Jeju Island. However, only a limited number of waypoints may be considered in a limited area. According to an example embodiment, it is possible to provide an optimal route planning service that may minimize a travel time and cost for a plurality of tourist destination candidates and to secure technological differentiation in the travel route planning service.

The systems and/or apparatuses described herein may be implemented using hardware components, software components, and/or a combination thereof. For example, apparatuses and components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. A processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that the processing device may include multiple processing elements and/or multiple types of processing elements. For example, the processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be embodied in any type of machine, component, physical equipment, virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more computer readable storage mediums.

The methods according to the example embodiments may be recorded in non-transitory computer-readable media including program instructions to implement various operations embodied by a computer. Also, the media may include, alone or in combination with the program instructions, data files, data structures, and the like. Program instructions stored in the media may be those specially designed and constructed for the example embodiments, or they may be well-known and available to those having skill in the computer software arts. Examples of non-transitory computer-readable media include magnetic media such as hard disks, floppy disks, and magnetic tapes; optical media such as CD ROM disks and DVDs; magneto-optical media such as floptical disks; and hardware devices that are specially to store and perform program instructions, such as read-only memory (ROM), random access memory (RAM), flash memory, and the like. Examples of program instructions include both machine code, such as produced by a compiler, and files containing higher level code that may be executed by the computer using an interpreter.

While this disclosure includes specific example embodiments, it will be apparent to one of ordinary skill in the art that various alterations and modifications in form and details may be made in these example embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A route representation method for a vehicle routing problem, wherein, to mathematically express a route in a graph including nodes and links, the route is loop-wisely expressed using loop variables and a base route,

   the loop is defined as a set of links of a predetermined directionality including a clockwise direction or a counterclockwise direction in which a start node and an end node are the same, and
   the loop variables are virtual variables each having a continuous value between a negative base route value and a positive base route value assigned in a predetermined directionality including a clockwise direction or a counterclockwise direction to the loop defined as the set of links.

2. The route representation method of claim 1, wherein, when a direction of the loop variable matches a direction of an adjacent link variable, a positive loop variable is assigned to a corresponding link variable, and
   when the direction of the loop variable is different from the direction of the adjacent link variable, a negative loop variable is assigned to the corresponding link variable.

3. The route representation method of claim 2, wherein the link variable is mathematically replaceable using two adjacent loop variables and a base route value, and
   when the two adjacent loop variables have the same value, the link variable is 0 and a corresponding link is excluded from the route.

4. The route representation method of claim 1, wherein the base route is an arbitrary route that connects an origin node and a destination node of the route, a base route value is an arbitrary positive number, and a travel direction is set in a direction from the origin node to the destination node,

when a direction of the base route matches a direction of a corresponding link, a positive base route value is assigned to a corresponding link variable, and
when the direction of the base route is different from the direction of the corresponding link, a negative base route value is assigned to the corresponding link variable.

5. The route representation method of claim 1, wherein the route is loop-wisely expressed using a cluster configuration of loop variables and the base route or expressed as a link route corresponding to the cluster configuration of loop variables and the base route.

6. The route representation method of claim 5, wherein additional constraints for connectivity between the routes is replaceable using the base route by loop-wisely expressing the route using the cluster configuration of loop variables and the base route, and, in response to a flow conversation law being satisfied in all nodes, the additional constraints for the connectivity between the routes are not required.

7. The route representation method of claim 5, wherein settings of constraints on a waypoint is replaceable by loop-wisely expressing the route using the cluster configuration of loop variables and the base route, and a traveling salesman problem (TSP) is formulated.

8. A route optimization method for a vehicle routing problem, the route optimization method comprising:

defining, by a loop variable designer, a loop as a set of links of a predetermined directionality including a clockwise direction or a counterclockwise direction in which a start node and an end node are the same in a graph including nodes and links to mathematically express the route;
defining, by the loop variable designer, loop variables that are virtual variables each having a continuous value between a negative base route value and a positive base route value assigned in a predetermined directionality including a clockwise direction or a counterclockwise direction to the loop defined as the set of links;
defining, by a base route designer, a base route that connects an origin node and a destination node of the route and has a positive value and of which a travel direction is set in a direction from the origin node to the destination node; and
formulating, by an effective route searcher, an effective route problem using the loop variables and the base route.

9. The route optimization method of claim 8, wherein the defining, by the loop variable designer, the loop variables comprises:

assigning a positive loop variable to a corresponding link variable when a direction of the loop variable matches a direction of an adjacent link variable; and
assigning a negative loop variable to the corresponding link variable when the direction of the loop variable is different from the direction of the adjacent link variable.

10. The route optimization method of claim 9, wherein the link variable is mathematically replaceable using two adjacent loop variables and a base route value, and
when the two adjacent loop variables have the same value, the link variable is 0 and a corresponding link is excluded from the route.

11. The route optimization method of claim 8, wherein the defining, by the base route designer, the base route comprises:

assigning a positive base route value to a corresponding link variable when a direction of the base route matches a direction of a corresponding link; and
assigning a negative base route value to the corresponding link variable when the direction of the base route is different from the direction of the corresponding link.

12. The route optimization method of claim 8, wherein the formulating comprises:

loop-wisely expressing the route using a cluster configuration of loop variables and the base route or expressing the route as a link route corresponding to the cluster configuration of loop variables and the base route; and formulating the effective route problem using the loop variables and the base route.

13. The route optimization method of claim 12, wherein additional constraints for connectivity between the routes is replaceable using the base route by loop-wisely expressing the route using the cluster configuration of loop variables and the base route, and, in response to a flow conversation law being satisfied in all nodes, the additional constraints for the connectivity between the routes are not required.

14. The route optimization method of claim 12, wherein settings of constraints on a waypoint is replaceable by loop-wisely expressing the route using the cluster configuration of loop variables and the base route, and a traveling salesman problem (TSP) is formulated.

15. A route optimization apparatus for a vehicle routing problem, the route optimization apparatus comprising:

a loop variable designer configured to define a loop as a set of links of a predetermined directionality including a clockwise direction or a counterclockwise direction in which a start node and an end node are the same in a graph including nodes and links to mathematically express the route, and to define loop variables that are virtual variables each having a continuous value between a negative base route value and a positive base route value assigned in a predetermined directionality including a clockwise direction or a counterclockwise direction to the loop defined as the set of links;
a base route designer configured to define a base route that connects an origin node and a destination node of the route and has a positive value and of which a travel direction is set in a direction from the origin node to the destination node; and
an effective route searcher configured to formulate an effective route problem using the loop variables and the base route.

# FIG. 1

# (RELATED ART)

# FIG. 2

**FIG. 3A**

Loop k

$$\overline{X}^{(k)}$$
Loop variable

# FIG. 3B

# FIG. 4

$$x_{i,j} = \overline{x}^{(l)} - \overline{x}^{(m)}$$
(reference direction: downward)

(a)

$$x_{i,j} = \overline{x}^{(l)} - \overline{x}^{(m)} + b$$
(reference direction: downward)

(b)

EP 4 303 536 A2

# FIG. 5

(a)

(b)

# FIG. 6

$$x_i^{(3)+} = x_i^{(k)-} = x^{(k)} \ \forall \ i \text{ and } k$$

FIG. 7

EP 4 303 536 A2

# FIG. 8

Start

Define loop as set of links of predetermined directionality including clockwise direction or counterclockwise direction in which start node and end node are the same in graph including nodes and links to mathematically express route — 810

Define loop variables that are virtual variables each having continuous value between negative base route value and positive base route value assigned in predetermined directionality including clockwise direction or counterclockwise direction to loop defined as set of links — 820

Define base route that connects origin node and destination node of route and has positive value and of which travel direction is set in direction from origin node to destination node — 830

Formulate loop variables and effective route problem using loop variables and base route — 840

End

# FIG. 9

900

Loop variable designer (910)

Base route designer (920)

Effective route searcher(930)

# FIG. 10

| | (a) | (b) |
|---|---|---|
| Optimal route | | |
| Total cost | 29.8 | 29.8 |

FIG. 11

EP 4 303 536 A2

| (a) | (b) | (c) |
|:---:|:---:|:---:|
|  | GA 100 | GA 1000 |

| Total route cost: | 77.5 | Total route cost: | 74.3 | Total route cost: | 74.3 |
|---|---|---|---|---|---|
| Computation amount (s): | 1.2 | Computation amount (s): | 5.4 | Computation amount (s): | 41.5 |

## FIG. 12

| (a) | | (b)<br>GA 100 | | (c)<br>GA 1000 | |
|---|---|---|---|---|---|
| Total route cost: | 103.7 | Total route cost: | 105.5 | Total route cost: | 102.6 |
| Computation amount (s): | 1.1 | Computation amount (s): | 6.8 | Computation amount (s): | 49.7 |

# FIG. 13

| (a) | (b) GA 100 | (c) GA 1000 |
|---|---|---|

| Total route cost: | 118.5 | Total route cost: | 128.2 | Total route cost: | 117.6 |
| Computation amount (s): | 2.0 | Computation amount (s): | 7.0 | Computation amount (s): | 53.0 |

EP 4 303 536 A2

# FIG. 14

| (a) | (b)<br>GA 100 | (c)<br>GA 1000 |
|---|---|---|
| Total route cost: 145.7 | Total route cost: 154.1 | Total route cost: 151.4 |
| Computation amount (s): 4.1 | Computation amount (s): 18.3 | Computation amount (s): 60.8 |

EP 4 303 536 A2

**FIG. 15**

(a)

(b)

# FIG. 16

| Experiment | Increase/decrease rate of total route cost over proposed method (%) | | | | | |
| --- | --- | --- | --- | --- | --- | --- |
| | GA 100 | | | GA 1000 | | |
| | Good | Same | Bad | Good | Same | Bad |
| 1 | 3.98 6time | 0 7time | -1.67 12time | 3.98 6time | 0 7time | -1.67 12time |
| 2 | 6.32 23time | 0 1time | -1.28 1time | 5.70 14time | 0 0time | -3.74 11time |
| 3 | 6.32 23time | 0 0time | -3.17 2time | 4.02 5time | 0 2time | -2.54 18time |
| 4 | 6.79 25time | 0 0time | 0 0time | 5.14 13time | 0 0time | -2.79 12time |

# FIG. 17

EP 4 303 536 A2